# EUROPÄISCHE PATENTSCHRIFT

(11) **EP 3 303 878 B1**
(45) Veröffentlichungstag und Bekanntmachung des Hinweises auf die Patenterteilung: **13.03.2019**
(21) Anmeldenummer: 16731782.5
(22) Anmeldetag: 30.05.2016
(51) Int. Cl.: F16H 7/12, F02B 67/06

(54) **RIEMENSPANNER**
BELT TENSIONER
TENDEUR DE COURROIE

(30) Priorität: 01.06.2015 DE 102015210002
(43) Veröffentlichungstag der Anmeldung: 11.04.2018
(73) Patentinhaber: Schaeffler Technologies AG & Co. KG, 91074 Herzogenaurach (DE)
(72) Erfinder: ARNETH, Roland, 91330 Eggolsheim (DE); WEIDNER, Alexander, 90766 Fürth (DE); MARICIC, Zoran, 90768 Fürth (DE)
(86) Internationale Anmeldenummer: PCT/DE2016/200256
(87) Internationale Veröffentlichungsnummer: WO 2016/192727

(56) Entgegenhaltungen:
- DE-A1-102013 203 522
- DE-B3-102013 203 957

## Beschreibung

Die Erfindung betrifft einen Riemenspanner für einen Nebenaggregate-Riementrieb, der einen Generator mit einem Generatorgehäuse, einer Generatorwelle und einer vom Riemen umschlungenen Generatorriemenscheibe umfasst, aufweisend:
- zwei ringförmig geschlossene Spannarme, die gegenseitig und gegenüber dem Generator schwenkbar auf dem Generatorgehäuse gelagert sind und die Generatorwelle umschließen,
- zwei an den Spannarmen angebrachte Spannrollen, die den Riemen in dessen Umlaufrichtung vor und hinter der Generatorriemenscheibe mit Vorspannkraft beaufschlagen,
- und eine die Vorspannkraft erzeugende Bogenfeder, die in axial mit den Spannrollen überlappender Anordnung zwischen den Spannarmen eingespannt ist,
wobei die Spannarme einen die Bogenfeder aufnehmenden, bogenförmigen Federraum begrenzen, dessen Umfangserstreckung im Umschlingungsbereich der Generatorriemenscheibe verläuft und durch zwei Wände eines der Spannarme begrenzt ist.

Riemenspanner mit ringförmig geschlossenen und die Generatorwelle umschließenden Spannarmen sind in mehreren Ausführungen aus der EP 2 128 489 B1 bekannt. Je nach Ausführung ist dort die Feder eine radial seitlich außerhalb der Spannarmlagerung angeordnete Schraubendruckfeder, eine im Bereich der Spannarmlagerung angeordnete Flachbandfeder oder eine die Spannarmlagerung umgreifende Bügelfeder Die axial im wesentlichen vollständig überlappende Anordnung der Feder mit den Spannarmen ermöglicht eine axial besonders kompakte Bauweise des Riemenspanners.

Auch die DE 10 2012 223 086 A1 und die DE 10 2013 102 562 A1 zeigen Riemenspanner mit ringförmig geschlossenen Spannarmen. In beiden Druckschriften ist die Feder eine die Generatorwelle umschließende Schraubendrehfeder, die jedoch in der erstgenannten Schrift nicht und in der zweitgenannten Schritt nur geringfügig axial überlappend mit den Spannrollen angeordnet ist Anders als die eingangs zitierten, gattungsgemäßen Riemenspanner sind diese Konstruktionen mit erhöhtem axialen Bauraumbedarf verbunden.

Die EP 2 557 295 B1 offenbart einen Riemenspanner mit zwei Spannarmen, von denen nur einer als geschlossener Ring ausgebildet ist und die Generatorwelle umschließt. Der andere Spannarm hingegen hat die Form eines offenen Kreisbogens und ist in einer Kavität des einen Spannarms gelagert.

Weitere Riemenspanner mit zwei gegenseitig und gegenüber dem Generator schwenkbaren Spannarmen sind aus der DE 10 2011 082 764 A1 und DE 10 2008 025 552 A1 bekannt.

Ein Riemenspanner mit ringförmig geschlossenen Spannarmen und einer dazwischen eingespannten Bogenfeder ist aus der DE 10 2013 002 993 A1 bekannt.

Ein Riemenspanner mit zwei Spannrollen, von denen eine Spannrolle an einem kreisbogenförmigen Spannarm angebracht ist, ist aus der gattungsgemässen DE 10 2013 203 522 A1 bekannt.

Der vorliegenden Erfindung liegt die Aufgabe zugrunde, einen gattungsgemäßen Riemenspanner im Hinblick auf dessen möglichst kompakte Bauweise konstruktiv zu verbessern.

Die Lösung dieser Aufgabe ergibt sich dadurch, dass die Bogenfeder zwischen einer der Wände und einem Mitnehmer des anderen Spannarms eingespannt ist. Der Mitnehmer springt gegenüber der kreisringförmigen Stirnfläche des anderen Spannarms axial hervor ragt und vor der anderen Wand in den Federraum hinein.

Diese konstruktive Ausgestaltung der Spannerbefederung mit einer Bogenfeder vereint die relativ hohe Formnutzzahl einer Torsionsfeder mit der umfänglichen Beschränkung der Feder auf einen bogenförmigen Bauraum, ohne auf die lagerungstechnisch günstige Geometrie der ringförmig geschlossenen Spannarme verzichten zu müssen. Denn die Bogenfeder kann bei ausreichend hohem Federvermögen im wesentlichen problemlos mit weitestgehender oder vollständiger axialer Überlappung mit den Spannrollen im Umschlingungsbereich der Generatorriemenscheibe positioniert werden. Wie allgemein bekannt, ist eine Bogenfeder
stete eine Schraubendruckfeder mit kreisbogenförmig offener Längserstreckung, und die Formnutzzahl vergleicht die aufgenommene Energie einer Feder mit der maximal möglichen gespeicherten Arbeit bei gleichem Federvolumen und gleicher Werkstoffepannung.

Weitere Merkmale und vorteilhafte Ausgestaltungen der Erfindung ergeben sich aus der nachfolgenden Beschreibung und aus den Zeichnungen, in denen ein Ausführungsbeispiel eines erfindungsgemäßen Riemenspanners dargestellt ist. Es zeigen:
- Figur 1: ein Generatorgehäuse mit dem darauf montierten Riemenspanner in perspektivischer Darstellung:
- Figur 2: den Riemenspanner in Vorderansicht;
- Figur 3: den Riemenspanner in Seitenansicht;
- Figur 4: den Riemenspanner in perspektivischer explodierter Ansicht;
- Figur 5: den Riemenspanner in perspektivischer Vorderansicht ohne Frontdeckel;
- Figur 6: die Ansicht gemäß Figur 5 bei entferntem anderen Spannarm;
- Figur 7: den anderen Spannarm in perspektivischer Rückansicht:
- Figur 8: den Riemenspanner in perspektivischer Rückansicht;
- Figur 9: die Ansicht gemäß Figur 8 bei entfernter rückseitiger Lagerung

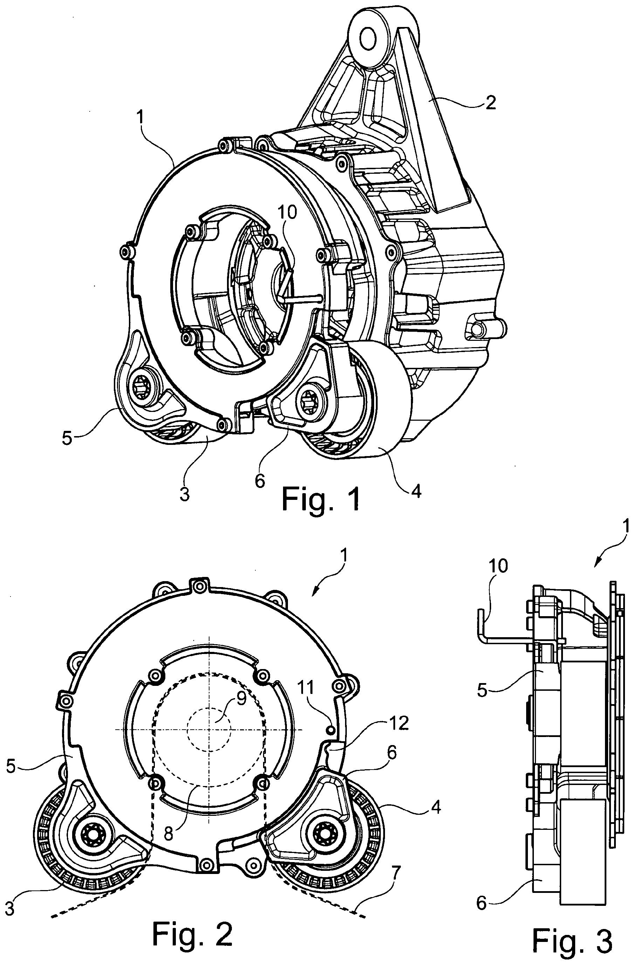

Figur 1 zeigt einen erfindungsgemäßen Riemenspanner 1 eines Nebenaggregate-Riementriebs einer Brennkraftmaschine im Zusammenbau mit dem vorderseitigen, d.h. riemenseitigen Teil eines Generatorgehäuses 2. Der Generator dient nicht nur zur Stromerzeugung, sondern wird zum Riemenstart oder Boosten der Brennkraftmaschine auch als (antreibender) Motor betrieben. Der Riemenspanner 1 umfasst zwei Spannrollen 3 und 4 an Spannarmen 5 und 6, die sowohl gegenseitig als auch gegenüber dem Generator schwenkbar auf dem Generatorgehäuse 2 gelagert sind, um das sich betriebsabhängig mit dem Zugtrum vertauschende Leertrum des Riemens vorzuspannen.

Die in Figur 2 dargestellte Vorderansicht des Riemenspanners 1 ist um den schematisch eingezeichneten Riemen 7 und die ebenfalls schematisch eingezeichnete Generatorriemenscheibe 8 ergänzt. Beide Spannarme 5, 6 sind ringförmig geschlossen und umschließen die Generatorwelle 9, deren Drehachse konzentrisch zur Schwenklagerung der Spannarme 5, 6 ist. In einer nicht dargestellten Alternativausführung ist auch eine nicht konzentrische Anordnung des Schwenklagers zur Generatorwelle 9 möglich, solange die Montierbarkeit des Riemenspanners auf den Generator gegeben ist und die Generatorriemenscheibe 8 mit dem umschlingenden Riemen 7 mit ausreichendem Abstand im Innern der Spannarme 5, 6 umlaufen kann.

Der Riemenspanner 1 wird in einer Stellung, in der die beiden Spannrollen 3, 4 möglichst weit voneinander beabstandet fixiert sind, auf den Generator montiert Der Riemen 7 ist dabei bereits auf die Generatorriemenscheibe 8 aufgelegt. Bei einer nicht dargestellten Alternatrivkonstruktion kann die Verschraubung der Spannrollen um 180° verdreht sein, so dass dann die Spannrollen 3, 4 umgekehrt, d.h. vom Generator ausgehend in die Riemenebene hineinragen und der Riemen erst nach der Montage des Riemenspanners aufgelegt werden muss. Die Fixierung erfolgt mit einem Sicherungsstift 10 gemäß den Figuren 1 und 3, der die Spannarme 5, 6 axial durchsetzt und ein Verschwenken des einen Spannarms 5 gegen den anderen Spannarm 6 blockiert Der Sicherungsstift 10 durchsetzt eine durchgehende Bohrung 11 des einen Spannarms 5 und eine außenumfängliche Ausnehmung 12 des anderen Spannarms 6. die bei entferntem Sicherungsstift 10 jeweils in Figur 2 erkennbar sind in der fixierten Stellung sind die beiden Spannrollen 3, 4 soweit voneinander beabstandet, dass der Riemen 7 ungespannt bleibt. Das Vorspannen des Riemens 7 erfolgt erst nach dem Entfernen des Sicherungsstifte 10, wobei die Spannrollen 3.4 aufeinander zu schwenken und den Riemen 7 in dessen Umlaufrichtung vor und hinter der Generatorriemenscheibe 8 spannen

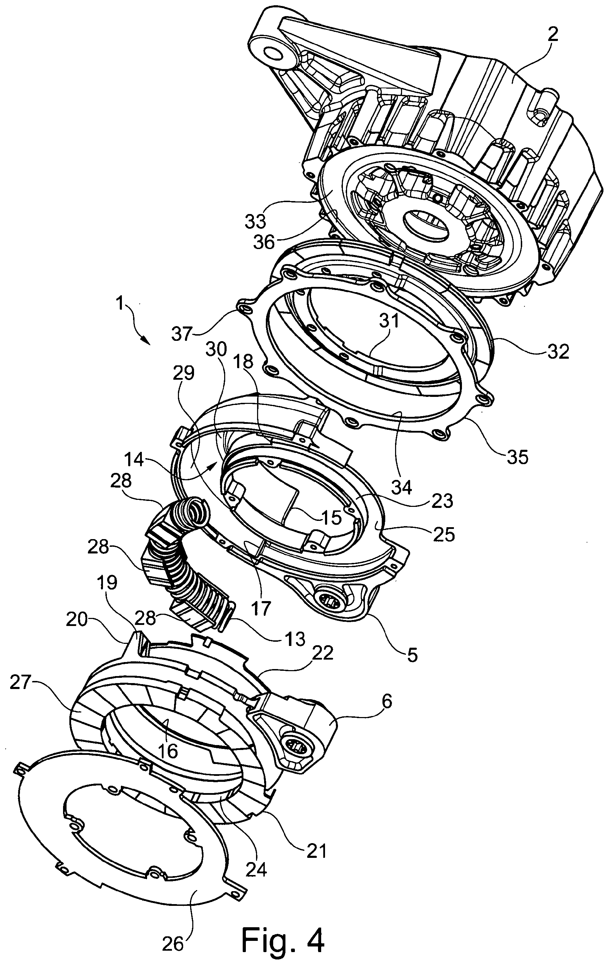

Die zur Erzeugung der Riemenvorspannung erforderliche Spannerbefederung ist in der explodierten Darstellung des Riemenspanners 1 gemäß Figur 4 erkennbar (die mit den Spannarmen 5, 6 verschraubten Spannrollen 3, 4 fehlen in dieser Darstellung). Es handelt sich um eine zwischen den Spannarmen 5, 6 eingespannte Bogenfeder 13, die parallel zur Riemenebene in einem entsprechend bogenförmigen Federraum 14 des einen Spannarms 5 aufgenommen ist Der Federraum 14 ist einerseits von einer sich in Axialrichtung der Spannrollen 3. 4 erhebenden, bogenförmigen Auswölbung 15 des einen Spannarms 5 und andererseits von der rückseitigen Stimfläche 16 des anderen Spannarms 6 begrenzt. In Zusammenschau mit den Figuren 1 bis 3 wird deutlich, dass der Federraum 14 und die darin aufgenommene Bogenfeder 13 im Umschlingungsbereich der Generatorriemenscheibe 8 verlaufen und in weitestgehender axialer Überlappung mit den Spannrollen 3, 4 angeordnet sind Folglich kann die Riemenebene mit vergleichsweise geringem Axialabstand zum Generatorgehäuse 2 verlaufen, so dass die Momentenbelastung des vorderen Generetorwellenlagers möglichst gering bleibt

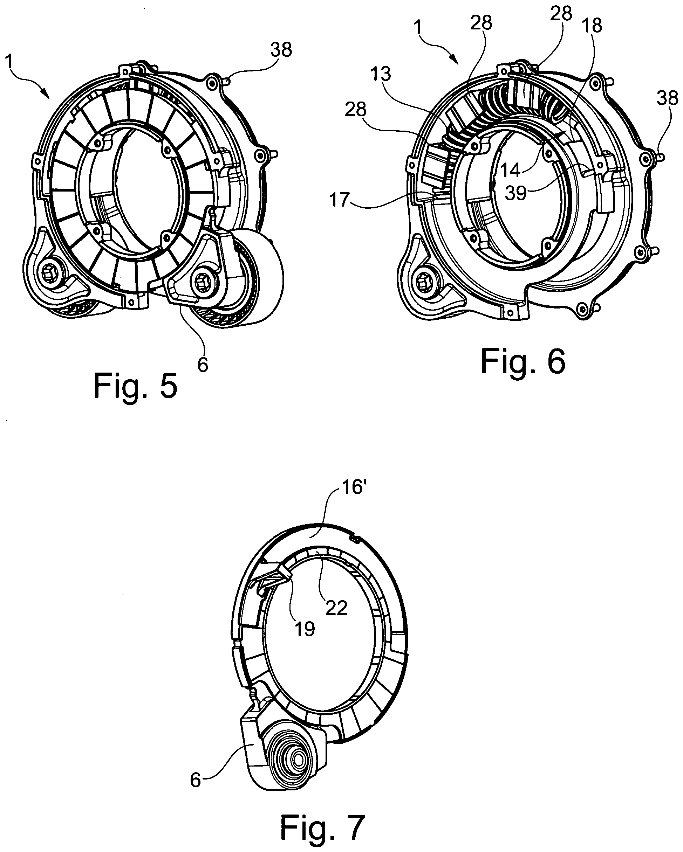

Der Federraum 14 erstreckt sich umfänglich über einen Bogenwinkel von etwa 180° und ist durch zwei Wände 17 und 18 (siehe auch Figur 6) an den umfänglichen Enden der bogenförmigen Auswölbung 15 begrenzt. Die Bogenfeder 13 ist zwischen der einen Wand 17 des einen Spannarms 5 und einer durch einen Mitnehmer 19 des anderen Spannarms 6 gebildeten Federauflage 20 eingespannt, um beide Spannrollen 3, 4 mit einem aufeinander zu gerichteten Drehmoment zu beaufschlagen. Der Mitnehmer 19 springt gegenüber der kreisringförmigen Stimfläche 16 des anderen Spannarms 6 axial hervor und ragt vor der anderen Wand 18 des einen Spannarms 5 in den Federraum 14 hinein. Dadurch, dass die Federauflage 20 vollständig oder zumindest überwiegend in axialer Überlappung mit der Spannrolle 4 verläuft, erzeugt das von der Bogenfeder 13 und der Spannrolle 4 eingebrachte Resktionskräftepaar ein vergleichsweise kleines Kippmoment in der Schwenklagerung des anderen Spannarms 6.

Insbesondere, aber dennoch nicht nur für den Fall, dass eine Bogenfeder 13 mit einem für das Federwtckeln ungünstig großen Bogenwinkel erforderlich ist, können auch zwei oder mehr Bogenfedern in Reihenschaltung und ein Federraum 14 mit entsprechend daran angepasstem Bogenwinkel vorgesehen sein.

Unabhängig davon sind auch parallel geschaltete Bogenfedern in Form eines Federpakets mit einer äußeren und einer inneren Bogenfeder möglich Mit Hilfe dieser Parameter lässt sich die Gesamtcharakteristik der Spannerbefederung in weiten Grenzen variieren.

Beide Spannarme 5. 6 sind Aluminium-Druckgussteile. Der andere Spannarm 6 ist mit einem zweiteiligen Gleitbelag aus einem der bekannten Gleitlagerkunststoffe, vorliegend Polyamid mit darin eingelagertem PTFE (Polytetrafluorethylen) versehen, wobei die beiden Belagteile 21 und 22 miteinander verschnappt sind. Die radiale Schwenklagerung des anderen Spannarms 6 erfolgt durch einen zylindrischen Außenmantel 23 des einen Spannarms 5 und einen darauf gleitenden Innenmantel 24 des vorderseitigen Belagteils 21. Die Axiallagerung des anderen Spannarms 6 erfolgt seitens des Generators durch die Stirnfläche 16 des rückseitigen Belagteils 22 und die umfänglich außerhalb des Federraums 14 verlaufende Stirnfläche 25 des einen Spannarms 5.

Ein als ebenes Blechstanzteil hergestellter und mit dem einen Spannarm 5 verschraubter Fronldeckel 26 bildet den Abschluss des Riemernspanners 1 auf dessen generatorferner Vorderseite und gemeinsam mit der Stirnfläche 27 des vorderseitigen Belagteils 21 das dem Generator abgewandte Axiallager des anderen Spannarms 6. Somit ist der andere Spannarm 6 lediglich an dem einen Spannarm 5 mit dem Frontdeckel 26, jedoch berührungsfrei gegenüber dem Generatorgehäuse 2 gelagert.

Falls erforderlich, kann das Eindringen von Schmutz und Spritzwasser in das Innere des Riemenspanners 1 durch zusätzliche (nicht dargestellte) Dichtungen erschwert und idealerweise vollständig verhindert werden.

Am Außenbogen der Bogenfeder 13 sind drei u-förmige Gleitschuhe 28 aus Polyamid fixiert, die die Reaktionskraft der Bogenfeder 13 in radial auswärtiger Richtung und in beidseitig axialer Richtung an den Spannarmen 5, 6 abstützen. Die radiale Abstützung erfolgt durch den Gleitkontakt der Gleitschuhe 28 mit dem bogenförmigen Innenmantel 29 des Federraums 14. Die axiale Abstützung, die ein axiales Ausweichen oder Ausknicken der Bogenfeder 13 verhindert, erfolgt seitens des Generators durch den Gleitkontakt der Gleitschuhe 28 mit dem Boden 30 des Federraums 14. Auf der gegenüberliegenden Seite erfolgt die axiale Abstützung durch den Gleitkontakt der dort im wesentlichen ebenen Gleitschuhe 28 mit der rückseitigen Stirnfläche 16' des anderen Spannarms 6, dessen rückseitiger Belagteil 22 in diesem Kontaktbereich ausgespart ist, siehe Figur 7

Durch die Vielzahl der Gleitkontakte, die in dem dargestellten Ausführungsbeispiel jeweils durch eine Kunststoffoberfläche einerseits und eine Metalloberfläche anderseits gebildet sind, ergibt sich ein weitgehender Spielraum in der Abstimmung der Reib- und mithin der betrieblichen Dämpfungscharakteristik des Riemenspanners 1. Bei der Abstimmung der Gleitkontakte im Hinblick auf deren jeweilige Werkstoffpaarung, Oberflächenform und -rauheit sowie ggfls. auf eine Befettung sind auch deren Relativbewegungen zu beachten. Diese werden beispielsweise zwischen den Gleitschuhen 28 und der Stirnfläche 16' des anderen Spannarms 6 größer, wenn man die Gleitkontakte vom Mitnehmer 19 ausgehend in Richtung der einen Wand 17 betrachtet. Umgekehrt werden dabei die Relativbewegungen zwischen den Gleifschuhen 28 einerseits und dem Innenmantel 29 und dem Boden 30 des Federraums 14 andererseits kleiner.

Der Riemenspanner 1 hat zu dessen Schwenklagerung auf dem Generatorgehäuse 2 einen auf der Außenseite der Auswölbung 15 befestigten Lagerring 31. Dieser ist mit einem Glieitbelag 32 überzogen, der ebenfalls aus Polyamid besteht und in axialer Richtung zwischen einer Stirnfläche 33 des Generatorgehäuses 2 einerseits und einer Stirnfläche 34 eines auf dem Generatorgehäuse 2 befestigten Lagerdeckets 35 andererseits gelagert ist Die Stirnfläche 33 des Generatorgehäuses 2 ist Teil einer Senkung, an deren Innenmantel 36 der Gleitbelag 32 des Lagerrings 31 in radialer Richtung gelagert ist. Der Lagerdeckel 35 kann somit eben ausgebildet sein und ist vorliegend ein geschlossen ringförmiges Blechformteil, das an insgesamt acht umfänglich verteilten Anschraubpunkten 37 mit dem Generatorgehäuse 2 verschraubt ist.

Die Figuren 5 und 6 zeigen den Riemenspanner 1 mitsamt den Lagerdeckelschrauben 38 im Zusammenbau, wobei jedoch der Frontdeckel 26 bzw auch der andere Spannarm 6 entfernt worden sind. Bei der Montage des anderen Spannarms 6. dessen generatorseitige Rückseite Figur 7 zeigt, ist die Bogenfeder 13 mit den darauf gehalterten Gleitschuhen 28 im Federraum 14 eingelegt, wobei die Federenden anders als in Figur 6 dargestellt - mit geringer Vorspannung an der einen Wand 17 und an der hinter dem Mitnehmer 19 verlaufenden anderen Wand 18 anliegen. Die andere Wand 18 ist mit einer Vertiefung 39 zur Aufnahme des Mitnehmers 19 versehen, so dass dieser bei der der Montage des anderen Spannarms 6 an den einen Spannarm 5 gegenüber der Bogenfeder 13 freigängig ist. Beim anschließenden Verdrehen des anderen Spannarms 6 in die fixierte Montagestellung gemäß Figur 1 hebt der Mitnehmer 19 die Bogenfeder 13 an und spannt sie vor, so dass die Bogenfeder 13 in sämtlichen Betriebsstellungen des Riemenspanners 1 zwischen der einen Wand 17 und der Federauflage 20 des Mitnehmers 19 eingespannt ist.

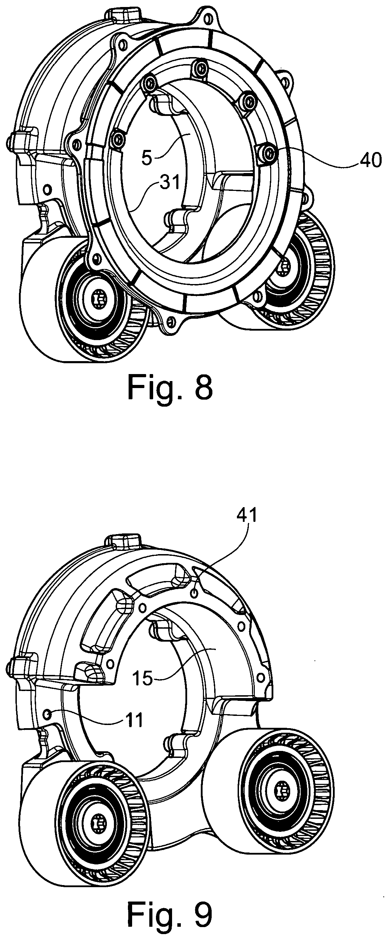

Der Lagerring 31 ist ebenfalls mittels einer Verschraubung an dem einen Spannarm 5 befestigt, wie es in den Figuren 8 und 9 illustriert ist. Alle fünf Anschraubpunkte befinden sich im wesentlichen im Umschlingungsbereich der Generatorriemenscheibe 8, wobei die Lagerringschrauben 40 in Gewindebohrungen 41 der Auswölbung 15 eingeschraubt sind. Alternativ sind andere bekannte und/oder unlösbare Befestigungsarten wie Verstemmen, Vernieten möglich.

### Liste der Bezugszahlen

- 1: Riemenspanner
- 2: Generatorgehäuse
- 3: Spannrolle
- 4: Spannrolle
- 5: Spannarm
- 6: Spannarm
- 7: Riemen
- 8: Generatorriemenscheibe
- 9: Generatorwelle
- 10: Sicherungsstift
- 11: Bohrung
- 12: Ausnehmung
- 13: Bogenfeder
- 14: Federraum
- 15: Auswölbung
- 16: Stimfläche des anderen Spannarms
- 17: Wand
- 18: Wand
- 19: Mitnehmer
- 20: Federauflage
- 21: vorderseitiger Belagteil
- 22: rückseitiger Belagteil
- 23: Außenmantel des einen Spannarms
- 24: Innenmantel des vorderseitigen Belagteils
- 25: Stirnfläche des einen Spannarms
- 26: Frontdeckel
- 27: Stirnfläche des vorderseitigen Belagteils
- 28: Gleitschuh
- 29: Innenmantel des Federraums
- 30: Boden des Federraums
- 31: Lagerring
- 32: Gleitbelag
- 33: Stirnfläche des Generatorgehäuses
- 34: Stirnfläche des Lagerdeckels
- 35: Lagerdeckel
- 36: Innenmantel der Senkung
- 37: Anschraubpunkt des Lagerdeckels
- 38: Lagerdeckelschraube
- 39: Vertiefung
- 40: Lagerringschraube
- 41: Gewindebohrung

## Patentansprüche

1. Riemenspanner (1) für einen Nebenaggregate-Riementrieb, der einen Generator mit einem Generatorgehäuse (2), einer Generatorwelle (9) und einer vom Riemen (7) umschlungenen Generatorriemenscheibe (8) umfasst, aufweisend:
- zwei ringförmig geschlossene Spannarme (5, 6), die gegenseitig und gegenüber dem Generator schwenkbar auf dem Generatorgehäuse (2) gelagert sind und die Generatorwelle (9) umschließen.
- zwei an den Spannarmen (5, 6) angebrachte Spannrollen (3, 4), die den Riemen (7) in dessen Umlaufrichtung vor und hinter der Generatorriemenscheibe (8) mit Vorspannkraft beaufschlagen.
- und eine die Vorspannkraft erzeugende Bogenfeder (13), die in axial mit den Spannrollen (3, 4) überlappender Anordnung zwischen den Spannarmen (5, 6) eingespannt ist,
wobei die Spannarme (5, 6) einen die Bogenfeder (13) aufnehmenden, bogenförmigen Federraum (14) begrenzen, dessen Umfangserstreckung im Umschlingungsbereich der Generatorriemenscheibe (8) verläuft und durch zwei Wände (17, 18) eines der Spannarme (5) begrenzt ist, **dadurch gekennzeichnet, dass** die Bogenfeder (13) zwischen einer der Wände (17) und einem Mitnehmer (19) des anderen Spannarms (6) eingespannt ist, welcher Mitnehmer (19) gegenüber der kreisringförmigen Stirnfläche des anderen Spannarms (6) axial hervor springt und vor der anderen Wand (18) in den Federraum (14) hinein ragt.

2. Riemenspanner (1) nach Anspruch 1, **dadurch gekennzeichnet, dass** die Bogenfeder (13) vor der gegenseitigen Montage der Spannarme (5, 6) an beiden Wänden (17, 18) anliegt, wobei die andere Wand (18) mit einer den Mitnehmer (19) bei der Montage des anderen Spannarms (6) an den einen Spannarm (5) aufnehmenden Vertiefung (39) versehen ist

3. Riemenspanner (1) nach Anspruch 1 oder 2. **dadurch gekennzeichnet, dass** am Umfang der Bogenfeder (13) ein oder mehrere Gleitschuhe (28) fixiert sind, die die Reaktionskraft der Bogenfeder (13) in radial auswärtiger Richtung gegen den bogenförmigen Innenmantel (29) des Federraums (14) und in axialer Richtung gegen den Boden (30) des Federraums (14) einerseits und/oder die dem Federraum (14) zugewandte Stirnfläche (16') des anderen Spannarms (6) andererseits abstützen.

4. Riemenspanner (1) nach einem der vorhergehenden Ansprüche, **dadurch gekennzeichnet, dass** der andere Spannarm (6) gegenüber dem Generatorgehäuse (2) berührungsfrei gelagert ist.

5. Riemenspanner (1) nach Anspruch 4, **dadurch gekennzeichnet, dass** der andere Spannarm (6) mit einem Gleitbelag zur gegenseitigen radialen und axialen Lagerung der Spannarme (5, 6) versehen ist.

6. Riemenspanner (1) nach einem der vorhergehenden Ansprüche, **dadurch gekennzeichnet, dass** der Federraum (14) von einer bogenförmigen Auswölbung (15) des einen Spannarms (5) begrenzt ist, wobei auf der Außenseite der Auswölbung (15) ein Lagerring (31) zur Schwenklagerung des Riemenspanners (1) auf dem Generatorgehäuse (2) befestigt ist.

7. Generator mit einem Generatorgehäuse (2) und einem darauf schwenkgelagerten Riemenspanner (1) nach Anspruch 6, **dadurch gekennzeichnet, dass** der Lagerring (31) mit einem Gleitbelag (32) überzogen ist, der in axialer Richtung zwischen einer Stirnfläche (33) des Generatorgehäuses (2) einerseits und einer Stirnfläche (34) eines auf dem Generatorgehäuse (2) befestigten Legerdeckels (35) andererseits gelagert ist

8. Generator mit einem Generatorgehäuse (2) und einem darauf schwenkgelagerten Riemenspanner (1) nach Anspruch 7, **dadurch gekennzeichnet, dass** die Stirnfläche (33) des Generatorgehäuses (2) Teil einer Senkung ist, an deren Innenmantel (36) der Gleitbelag (32) des Lagerrings (31) in radialer Richtung gelagert ist.

9. Generator mit einem Generatorgehäuse (2) und einem darauf schwenkgelagerten Riemenspanner (1) nach Anspruch 8, **dadurch gekennzeichnet, dass** der lagerdeckel (35) ein ebenes Blechformteil ist.

## Claims

1. Belt tensioner (1) for an ancillary unit belt drive which comprises a generator with a generator housing (2), a generator shaft (9) and a generator pulley wheel (8) which is wrapped around by the belt (7), having:
- two tensioning arms (5, 6) which are closed in an annular manner, are mounted on the generator housing (2) such that they can be pivoted with respect to one another and with respect to the generator, and enclose the generator shaft (9),
- two tensioning rollers (3, 4) which are attached to the tensioning arms (5, 6) and load the belt (7) with prestressing force in its actuating direction in front of and behind the generator pulley wheel (8),
- and a bow spring (13) which generates the prestressing force and is clamped in between the tensioning arms (5, 6) in an arrangement, in which it overlaps axially with the tensioning rollers (3, 4),
the tensioning arms (5, 6) delimiting an arcuate spring space (14) which receives the bow spring (13) and the circumferential extent of which runs in the wraparound region of the generator pulley wheel (8) and is delimited by way of two walls (17, 18) of one of the tensioning arms (5), **characterized in that** the bow spring (13) is clamped in between one of the walls (17) and a driver (19) of the other tensioning arm (6), which driver (19) projects axially with respect to the circularly annular end face of the other tensioning arm (6) and protrudes into the spring space (14) in front of the other wall (18) .

2. Belt tensioner (1) according to Claim 1, **characterized in that** the bow spring (13) bears against the two walls (17, 18) before the mutual mounting of the tensioning arms (5, 6), the other wall (18) being provided with a depression (39) which receives the driver (19) during the mounting of the other tensioning arm (6) on the one tensioning arm (5).

3. Belt tensioner (1) according to Claim 1 or 2, **characterized in that** one or more sliding pads (28) are fixed on the circumference of the bow spring (13), which sliding pads (28) support the reaction force of the bow spring (13) in the radially outward direction against the arcuate inner shell (29) of the spring space (14) and in the axial direction against the bottom (30) of the spring space (14) on one side and/or that end face (16') of the other tensioning arm (6) which faces the spring space (14) on the other side.

4. Belt tensioner (1) according to one of the preceding claims, **characterized in that** the other tensioning arm (6) is mounted without contact with respect to the generator housing (2).

5. Belt tensioner (1) according to Claim 4, **characterized in that** the other tensioning arm (6) is provided with a sliding coating for mutual radial and axial mounting of the tensioning arms (5, 6).

6. Belt tensioner (1) according to one of the preceding claims, **characterized in that** the spring space (14) is delimited by an arcuate protuberance (15) of the one tensioning arm (5), a bearing ring (31) for pivotably mounting the belt tensioner (1) on the generator housing (2) being fastened on the outer side of the protuberance (15) .

7. Generator having a generator housing (2) and a belt tensioner (1) according to Claim 6 which is mounted pivotably thereon, **characterized in that** the bearing ring (31) is covered with a sliding coating (32) which is mounted in the axial direction between an end face (33) of the generator housing (2) on one side and an end face (34) of a bearing cover (35) which is fastened on the generator housing (2) on the other side.

8. Generator having a generator housing (2) and a belt tensioner (1) according to Claim 7 which is mounted pivotably thereon, **characterized in that** the end face (33) of the generator housing (2) is part of a depression, on the inner shell (36) of which the sliding coating (32) of the bearing ring (31) is mounted in the radial direction.

9. Generator having a generator housing (2) and a belt tensioner (1) according to Claim 8 which is mounted pivotably thereon, **characterized in that** the bearing cover (35) is a planar shaped sheet metal part.

## Revendications

1. Tendeur de courroie (1) pour un entraînement par courroie d'accessoires, qui comprend un générateur avec un boîtier de générateur (2), un arbre de générateur (9) et une poulie de générateur (8) entourée par la courroie (7), présentant:
- deux bras de tension (5, 6) fermés en forme d'anneau, qui sont montés de façon pivotante l'un par rapport à l'autre et par rapport au générateur sur le boîtier de générateur (2) et qui encadrent l'arbre de générateur (9),
- deux rouleaux de tension (3, 4) installés sur les bras de tension (5, 6), qui appliquent à la courroie (7) une force de précontrainte avant et après la poulie de générateur (8) dans sa direction de défilement, et
- un ressort arqué (13) produisant la force de précontrainte, qui est encastré entre les bras de tension (5, 6) en un agencement à chevauchement axial avec les rouleaux de tension (3, 4),
dans lequel les bras de tension (5, 6) limitent une chambre de ressort (14) en forme d'arc contenant le ressort arqué (13), dont l'extension périphérique s'étend dans la zone de contact de la poulie de générateur (8) et est limitée par deux parois (17, 18) d'un des bras de tension (5), **caractérisé en ce que** le ressort arqué (13) est encastré entre une des parois (17) et un entraîneur (19) de l'autre bras de tension (6), entraîneur (19) qui est saillant axialement par rapport à la face frontale annulaire ronde de l'autre bras de tension (6) et pénètre dans la chambre de ressort (14) devant l'autre paroi (18) .

2. Tendeur de courroie (1) selon la revendication 1, **caractérisé en ce que** le ressort arqué (13) s'applique sur les deux parois (17, 18) avant le montage mutuel des bras de tension (5, 6), dans lequel l'autre paroi (18) est dotée d'un creux (39) recevant l'entraîneur (19) lors du montage de l'autre bras de tension (6) sur le premier bras de tension (5).

3. Tendeur de courroie (1) selon la revendication 1 ou 2, **caractérisé en ce qu'**un ou plusieurs sabot(s) de glissement (28) est/sont fixé(s) à la périphérie du ressort arqué (13), qui supportent la force de réaction du ressort arqué (13) en direction radialement extérieure contre la surface latérale intérieure arquée (29) de la chambre de ressort (14) et en direction axiale contre le fond (30) de la chambre de ressort (14) d'une part et/ou contre la face frontale (16') de l'autre bras de tension (6) tournée vers la chambre de ressort (14) d'autre part.

4. Tendeur de courroie (1) selon l'une quelconque des revendications précédentes, **caractérisé en ce que** l'autre bras de tension (6) est monté sans contact par rapport au boîtier de générateur (2).

5. Tendeur de courroie (1) selon la revendication 4, **caractérisé en ce que** l'autre bras de tension (6) est muni d'une garniture de glissement en vue du support radial et axial mutuel des bras de tension (5, 6).

6. Tendeur de courroie (1) selon l'une quelconque des revendications précédentes, **caractérisé en ce que** la chambre de ressort (14) est limitée par un renflement en forme d'arc (15) du premier bras de tension (5), dans lequel une bague de palier (31) est fixée sur le côté extérieur du renflement (15) en vue du montage pivotant du tendeur de courroie (1) sur le boîtier de générateur (2) .

7. Générateur avec un boîtier de générateur (2) et un tendeur de courroie (1) monté de façon pivotante sur celui-ci selon la revendication 6, **caractérisé en ce que** la bague de palier (31) est revêtue d'une garniture de glissement (32), qui est montée en direction axiale entre une face frontale (33) du boîtier de générateur (2) d'une part et une face frontale (34) d'un couvercle de palier (35) fixé sur le boîtier de générateur (2) d'autre part.

8. Générateur avec un boîtier de générateur (2) et un tendeur de courroie (1) monté de façon pivotante sur celui-ci selon la revendication 7, **caractérisé en ce que** la face frontale (33) du boîtier de générateur (2) fait partie d'un enfoncement, sur la surface latérale intérieure (36) duquel la garniture de glissement (32) de la bague de palier (31) est posée en direction radiale.

9. Générateur avec un boîtier de générateur (2) et un tendeur de courroie (1) monté de façon pivotante sur celui-ci selon la revendication 8, **caractérisé en ce que** le couvercle de palier (35) est une pièce formée plane en tôle.
